# EUROPEAN PATENT APPLICATION

(11) **EP 4 715 186 A1**
(43) Date of publication of application: **25.03.2026**
(21) Application number: 25203806.2
(22) Date of filing: 22.09.2025
(51) Int. Cl.: F02C 7/232, F02C 9/40

(54) **HYDRAULICALLY DRIVEN FLUID INJECTION SYSTEM**

(30) Priority: 23.09.2024 US 202418893103
(71) Applicant: Hamilton Sundstrand Corporation, Charlotte, NC 28217-4578 (US)
(72) Inventor: SUSCA, Ryan, Windsor, CT, 06095 (US); MASTROCOLA, Naison, Goshen, CT, 06756 (US)
(74) Representative: Dehns

(57) **Abstract**

A hydraulically driven fluid injection system comprising a reservoir (140) having a first and second chamber and a piston (142) separating the first and second chamber. A reservoir control valve (124) to control the input of a first fuel source to the first chamber. The reservoir control may operate by having an open and a closed state. Alternatively, the reservoir control may have a first mode, a second mode, and a third mode. A second fuel may be provided to the second chamber and a metering valve may be utilized to control the flow of the second fuel to an injector. When the secondary fuel is desired, the reservoir control valve may open to allow the primary fuel to pressurize the first chamber. The result of the pressure on the first chamber causes the piston to apply a pressure to the second chamber. The metering valve may then allow the secondary fuel to flow from the second chamber to an injector.

## Description

### BACKGROUND

The dual fuel system enables a turbine engine to operate with multiple fuel sources. Dual fuel engines may be advantageous for multiple reasons. For example, as the aircraft gains in altitude, it may be advantageous to operate the engine on a different fuel that is able to function in a low oxygen environment. Alternatively, a secondary fuel may be desirable to minimize the impact of contrails from the aircraft. Current systems operate with additional pumps, motors, and motor controllers. To reduce weight, there is a need to eliminate additional pumps, motors, and motor controllers to pressurize the secondary fluid. A system is proposed that will utilize an existing aircraft hydraulic system to provide a pressurized secondary fuel.

### SUMMARY

It is desirable to introduce a fuel injection system that is not reliant upon additional pumps or motors or motor controllers. It is proposed that by utilizing the existing cooling loops and/or fuel pressure available from the primary fuel systems, an improved system is available. By implementing a reservoir which receives an input pressure from the primary fuel source, it is possible to utilize this system to provide a secondary fuel at a desired pressure to an injector.

A hydraulically driven fluid injection system is proposed which incorporates a reservoir having a first chamber and a second chamber with a piston separating the first and second chamber. The system may incorporate a reservoir control valve to control the input into the first chamber of a primary fuel at a first pressure. The second chamber of the reservoir is configured to receive a secondary fuel. A metering valve may be utilized to control the output of the secondary fuel to a fuel injector. The system operates by the reservoir control valve opening and the primary fuel pressurizing the first chamber. When the first chamber is pressurized, the piston moves towards the second chamber, increasing the pressure on the secondary fuel. When the secondary fuel is under pressure, the metering valve may allow the secondary fuel to flow from the second chamber to the injectors.

To fill the second chamber, a check valve may be fluidly connected to the first chamber and an input line provided to the first chamber from a fill port. The check valve may be connected to a drain port. When the reservoir control valve is closed, the check valve may open, allowing any fuel in the first chamber to drain. This will result in the pressure in the first chamber lowering. The fill port may then be connected to a supply of the secondary fuel, which may fill the second chamber through the fill line. Once the second chamber is full, the check valve may be closed and the fill port sealed.

The primary fuel may be part of a fuel cooling channel wherein the primary fuel may be routed around a jet engine to cool the engine. The primary fuel may be pressurized to ensure it flows around the engine. In multiple modes, the primary fuel pressure may be utilized to shift the valves from a first position to a secondary position. In an alternative embodiment, an electrohydraulic solenoid valve (EHSV) may be utilized to control one or more valves. Through the use of the primary fuel pressure, it is possible to eliminate the need for additional pumps and motors to introduce the secondary fuel to the injectors.

### BRIEF DESCRIPTION OF THE DRAWINGS

FIG. 1 illustrates an improved fuel injection system.
FIG. 2 illustrates an alternative embodiment of the improved fuel injection system.
FIG. 3 illustrates a further alternative embodiment.
FIG. 4 illustrates a fourth embodiment of the improved fuel injection system.

### DETAILED DESCRIPTION

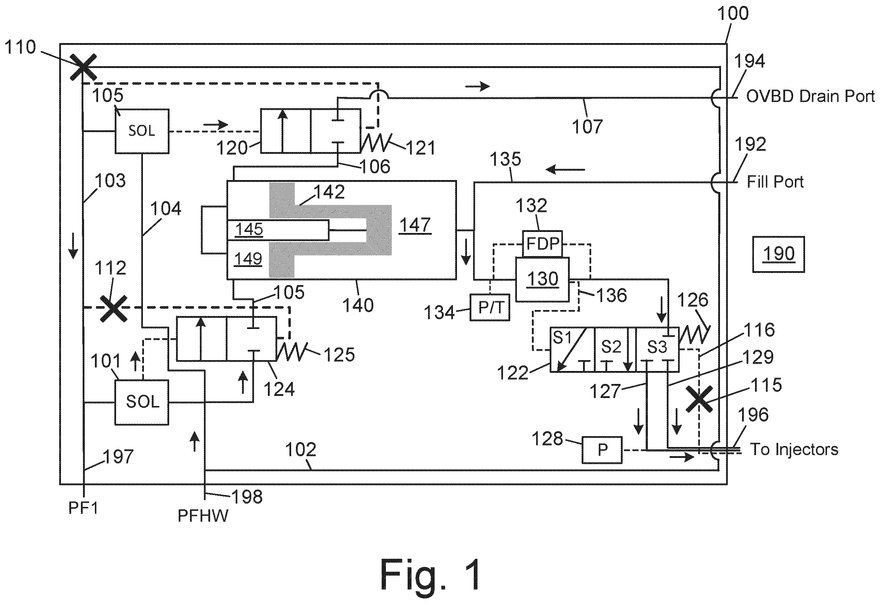

FIG. 1 illustrates a fuel injection system for a secondary fuel. The system incorporates a fuel cooling loop comprising an input 198 from an external primary fuel source at a first pressure and flow of PFHW. The primary fuel may be utilized for cooling by routing the fuel through a cooling loop 102. The cooling loop 102 may be routed through various engine systems to provide cooling. The cooling loop 102 may be routed to an orifice 110 and out discharge line 103 through output 197 to a fuel reservoir (not shown). The pressure at the output 197 may be at a pressure PF1, which may be lower than the pressure PFHW at input 198 as a result of orifice 110.

The fuel source from input 198 may further be provided to solenoid 101 and solenoid 105 along with reservoir control valve 124. Reservoir control valve 124 may be configured to provide an input to a reservoir 140. Solenoids 101 and 105 may receive an input from an external control such as an electronic engine control (EEC) 190. Reservoir 140 comprises a piston 142, a first chamber 149, and a second chamber 147. The reservoir 140 further comprises a linear variable differential transducer (LVDT) 145. The LVDT 145 measures the position of the piston 142. The fuel from control valve 124 may be provided to the first chamber 149 of reservoir 140.

Reservoir control valve 124 may have an open position and a closed position. A spring 125 may bias the reservoir control valve to a closed position. Solenoid 101 may provide an input from a reservoir control valve 124 which opens the reservoir control valve 124. An output from the first chamber 149 of reservoir 140 may have an output 106 to a check valve 120. Check valve 120 may have an open and a closed state and may have a spring 121 which biases the check valve 120 to a closed state. Solenoid 105 may provide an input to check valve 120 which opens check valve 120.

A secondary fuel may be provided to the system via a fill port 192. The fill port may be provided to a second chamber 147 through fill line 135 to reservoir 140. The fill port 192 may be open when the secondary fuel is provided and sealed when the filling process is complete. During the fill process, an input to solenoid 101 may close reservoir control valve 124 and solenoid 105 may open check valve 120. By opening check valve 120 the fuel in chamber 149 may be expelled through check valve 120 to an output line 107 to a drain port 194. In this mode, any secondary fuel input at fill port 192 will cause the piston 142 to allow secondary fuel to fill chamber 147 and for chamber 147 to expand and fill with the secondary fuel. Once chamber 147 if full, the fill port 192 may be sealed and solenoid 105 may cause check valve 120 to close.

A secondary fuel channel may also provide the secondary fuel from the reservoir 140 to a filter 130 which may be provided to a metering and rapid-purge and shutoff valve (MPSV) 122. The MPSV 122 may provide an output to a large line 127, and/or a thin line 129. The large line 127 and the thin line 129, may be provided to an output 196 to the engine injectors or another location. The MPSV 122 has three modes. The first state is a purge mode S1 which may result in a large secondary fuel flow through large line 127. The second state S2 is a metering state resulting in a metered flow through line 129, and the third state S3, is a closed state. A pressure sensor 128 may measure the pressure at the output 196. Further a pressure and temperature monitor 134 may monitor the pressure and temperature of the secondary fuel entering the filter. A filter delta pressure monitor (FDP) 132 may be utilized to measure the pressure drop across the filter which is related to the level of blockage of the filter. A system to wash the filter may be implemented such as taught in US Patent Application 18/828,396 Filter with Wash Flow Bypass Valve and hereby incorporated by reference.

During the fill operation, check valve 120 opens to allow the secondary fuel to input through fill port 192 to chamber 147. Once the chamber is full, the fill port 192 may be closed and check valve 120 is switched to a closed position. When the system calls for the secondary fuel, reservoir control valve 124 opens to allow chamber 149 to become pressurized placing the secondary fuel in chamber 147 under pressure. MPSV 122 may move to position S1 to allow the secondary fuel to purge the system by providing a high level of flow through large line 127. Once the fuel pressure stabilizes as measured by pressure sensor 128, MPSV 122, may shift to position S2 to allow for a metered flow to the injectors. When the secondary fuel need is met, the system may place the MPSV 122 in position S3 to stop the flow of the secondary fuel. In addition, reservoir control valve 124 may close. LVDT 145 measures the position of piston 142 providing the result to, for example, an EEC 190. This allows the EEC 190 to calculate how much remaining secondary fuel is present in chamber 147.

The operation of MPSV 122 may be the result of inputs from lines 136 at the output from filter 230, and the return 116 after passing through orifice 115. The resulting pressure differentials and spring 126 will cause MPSV 122 to be biased through positions S1 to S3. When reservoir valve 124 opens the pressure at chamber 149 will increase which increases the pressure at chamber 147 and results in pressure at line 136 to increasing. As the MPSV 122 is closed, there may be minimal pressure at return 116 to assist spring 126. As a result, the MPSV 122 will move to position S1. Once flow is established to output 196, the pressure at line 116 will increase, resulting in MPRSV 122 moving to position S2. Finally, when the reservoir valve 124 closes, the pressure at chamber 149 will decrease, resulting in a lower pressure at chamber 147. As the pressure decreases, the resulting pressure on line 136 will decrease, allowing spring 126 to move MPSV 122 return to position S3.

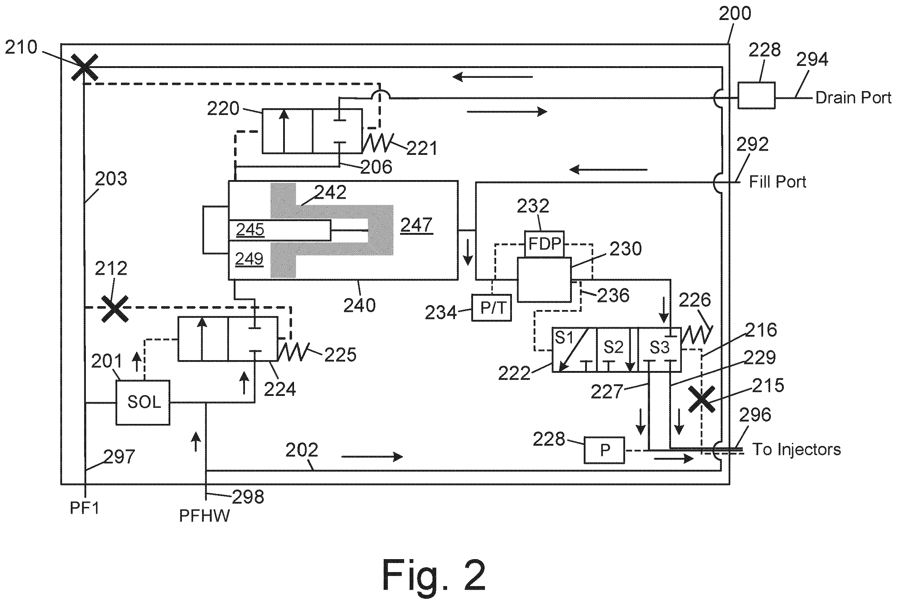

FIG. 2 illustrates an alternative embodiment of the improved fuel injection system of FIG. 1. FIG. 2 operates in a similar manner to the system illustrated in FIG. 1. However, the alternative systems do not include solenoid 105. Check valve 220 operates by allowing spring 221 and the pressure differential between the pressure at discharge line 203 and the pressure exerted by the output 206 of reservoir 240 to determine its position. During the process to fill the reservoir 240 from fill port 292, reservoir valve 224 will remain closed. As the secondary fuel fills chamber 247, the pressure in chamber 247 is applied to piston 242 and compresses chamber 249, increasing the output pressure at output 206. In addition, as there isn't fuel flowing in the cooling loop 202, the pressure from discharge line 203 may be minimal. Thus, when the secondary fuel fill is initiated, valve 228 will be open and check valve 220 will open, permitting the fuel in chamber 249 to drain and chamber 247 to be filled with the secondary fuel.

Once the secondary fuel fill is complete, the fill port 192 will be sealed and a valve 228 may be closed to prevent additional drainage from the check valve in operation. As can be seen when the system is in operation and reservoir valve 224 opens, the pressure on line 206 will open, potentially causing check valve 220 to open. However, it is noted that when in operation the pressure on discharge line 203 will also increase as there will be flow through cooling loop 202. Orifice 210 may be set to allow the pressure at discharge line 203 to be sufficient to maintain check valve 220 in a closed position.

The operation of the secondary fuel system will be similar to that demonstrated in FIG. 1. Wherein solenoid 201 may switch the input from the discharge line 203 to input 298, resulting in reservoir valve 224 overcoming the bias of spring 225 and the input from orifice 212. As reservoir valve 224 opens, the pressure in chamber 249 increases, moving piston 242 and increasing the pressure on chamber 247. This results in the pressure increasing at filter 230 as measured by pressure and temperature sensor 234 and FDP sensor 232. As the pressure increases, the pressure on line 236 increases causing MPSV 222 to shift to position S1 resulting in a purge flow through large line 227 to output 296 to the injectors (not shown). As the flow increases, the pressure across orifice 215 increases resulting in MPSV 222 shifting to position S2 and a flow through smaller line 229. As described earlier when reservoir valve 224 closes, the pressure at line 236 will decrease allowing MPSV 222 to close.

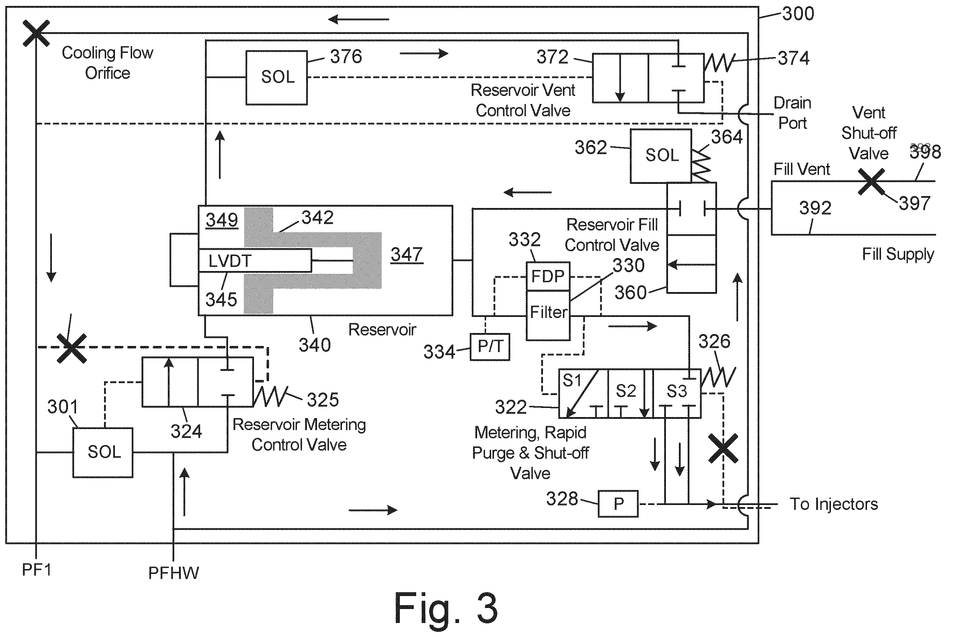

FIG. 3 illustrates a further alternative embodiment. In FIG. 3, the system provides a reservoir fill control valve 360. FIG. 3 allows for the purging of the fill supply line 392 prior to filling reservoir chamber 347. The system 300 of FIG. 3 operates in a similar manner as described in FIG. 1. However, during the fill process, when reservoir vent control valve 372 opens and the input 392 from the fill supply is provided, initially valve 397 may be manually opened allowing for the purging of air out line 398. Once the air in the fill supply input 392 is purged, the vent shut off valve 397 may be closed. Solenoid 362 may then open reservoir fill control valve 360 allowing the system to fill in the manner described earlier. When the reservoir 347 is full, the reservoir control valve 360 may close.

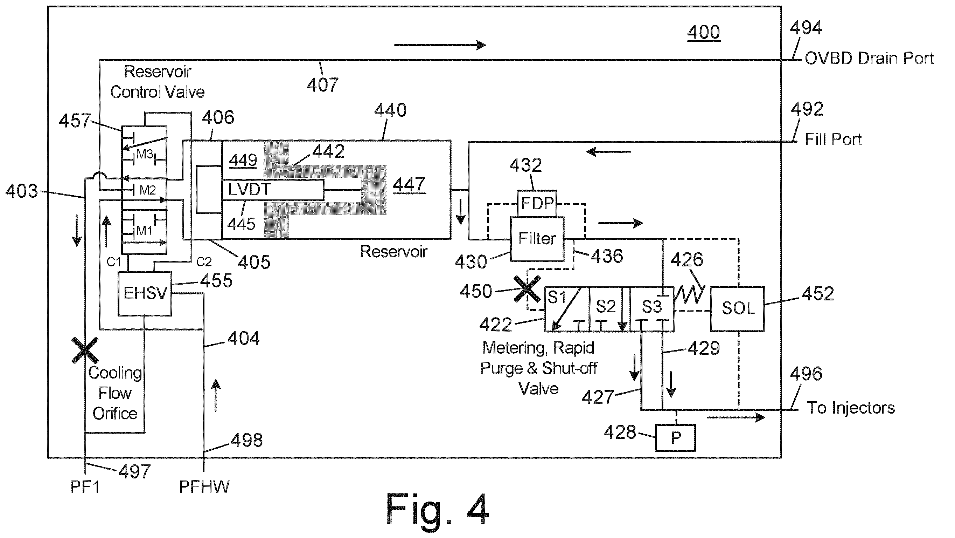

FIG. 4 illustrates a fourth embodiment of the improved fuel injection system 400. System 400 differs from the earlier systems by eliminating the cooling loop 102, 202, and 302 of FIGs. 1-3. The operation of FIG. 4 relies upon the reservoir control valve 457 to control the primary fuel side of the system 400. Input 498 from the external fuel supply may be provided to EHSV 455. The input from the fuel supply through line 404 is further provided to the reservoir control valve 457. The reservoir control valve 457 has three modes of operation. Mode M1 allows for the primary fuel to be provided to a first chamber 449. Mode M2 allows for the flow of fuel from the fuel supply line 404 to the first chamber 449 and from the first chamber through line 406 to the discharge line 403. Mode M3 allows for the fuel in line 406 to connect to the discharge line 403.

The process for filling chamber 447 with the secondary fuel may have the reservoir control valve 457 shifting to mode M3. The fill port 492 provides a secondary fuel source. As the chamber 449 is able to output any remaining fuel in the chamber 449 though line 406, chamber 447 is able to fill. The excess fuel in chamber 449 is provided through line 406 in mode M3 to discharge line 407 to drain port 494. LVDT 445 may determine the position of piston 442 and signal when the reservoir 440 is full. Once full, the fill port 492 is closed and reservoir control valve 457 may shift to mode M2 to allow for a steady state. When the secondary fuel is desired, EHSV 455 shifts reservoir control valve 457 to mode M1. In mode M1, the pressure in chamber 449 increases causing piston 442 to move and exert pressure on chamber 447.

As the pressure on chamber 447 increases, solenoid 452 may control the MPSV 422. Spring 426 may bias MPSV 422 to closed state S3. An orifice 450 allows for a pressure drop from the pressure of line 436 to MPSV 422. Solenoid 452 may cause MPSV 422 to move to state S1, and as described earlier, secondary fuel may flow through line 427 at a high rate until the system is purged and MRSV 422 shifts to state S2 as controlled by solenoid 452. Line 427 may be a larger diameter line to allow a significant fuel flow. As discussed before, in state S2, the secondary fuel may flow through a smaller diameter line 429 to output 496. When the secondary fuel is no longer desired, the solenoid 452 may switch the MPSV 422 to state S3, while reservoir control valve 457 may be switched to mode M2.

While the configuration of FIG. 4 utilizes a solenoid to control the MRSV 422, the system could be configured as shown in FIGs. 1 - 3. Further, the addition of the elements of FIG. 3 may be utilized in any of the additional embodiments. One of ordinary skill in the art would be able to take advantage of any of the configurations to provide alternative configurations utilizing of the novel concepts presented.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hydraulically driven fluid injection system comprising:
a reservoir (140) having a first and second chamber and piston separating the first and second chamber;
a reservoir control valve (124);
a metering valve;
wherein, the reservoir (140) is configured to receive a secondary fuel source in the second chamber and a primary fuel from the reservoir control valve in the first chamber;
wherein, the system is configured, such that when the reservoir control valve is in an open position;
wherein the piston (142) is configured to apply a pressure to the second chamber; and
wherein, the metering valve is configured to allow the secondary fuel to flow from the second chamber when the first pressure is applied to the second chamber.

2. The hydraulically driven fluid injection system of claim 1 further comprising a check valve (120), configured to receive an output from the first chamber, and optionally wherein the check valve (120) is configured to open, allowing for the filling of the second chamber.

3. The hydraulically driven fluid injection system of any preceding claim wherein the metering valve has a first output and a second output, wherein the metering valve is configured to allow the secondary fuel to flow through the first output in a first state, configured to allow the secondary fuel to flow through the second output in a second state, and configured to close in a third state.

4. The hydraulically driven fluid injection system of any preceding claim further comprising a first solenoid (101) configured to control the reservoir valve.

5. The hydraulically driven fluid injection system of claim 2 further comprising a second solenoid (105) configured to control the check valve.

6. The hydraulically driven fluid injection system of claim 5 further comprising a first solenoid (101) configured to control the reservoir valve, and optionally further comprising a third solenoid valve configured to control the metering valve.

7. The hydraulically driven fluid injection system of any preceding claim further comprising a reservoir fill control valve (360) configured to receive a secondary fuel.

8. The hydraulically driven fluid injection system of claim 7 further comprising a solenoid configured to control the reservoir fill control valve.

9. The hydraulically driven fluid injection system of claim 8 wherein the metering valve has a first output and a second output, the metering valve is configured to provide an output to the first output in a first state, configured to provide an output to the second output in a second state, and configured to close in a third state, and/or wherein the check valve is configured to open allowing for the filling of the second chamber.

10. The hydraulically driven fluid injection system of claim 6 further comprising a cooling loop (102), wherein the cooling loop is configured to provide an input to the first solenoid and the second solenoid.

11. A hydraulically driven fluid injection system comprising:
a reservoir (140) having a first chamber and a second chamber and a piston (!42) separating the first chamber and the second chamber;
a reservoir control valve (124) having a first mode, a second mode and a third mode;
a metering valve;
wherein, the reservoir is configured to receive a secondary fuel source in the second chamber and configured to allow a primary fuel from the reservoir control valve in the first chamber;
wherein, the system is configured, such that when the reservoir control valve is in the first mode;
wherein the piston is configured to apply a pressure to the second chamber; and
wherein, the metering valve is configured to allow the secondary fuel to flow from the second chamber when a pressure is applied to the second chamber.

12. The hydraulically driven fluid injection system of claim 11 wherein the system is configured to allow a secondary fuel to fill the second chamber when the reservoir control valve (124) is in the third mode.

13. The hydraulically driven fluid injection system of claim 11 or 12 wherein the metering valve has a first output and a second output, the metering valve is configured to provide an output to the first output in a first state, configured to provide an output to the second output in a second state, and configured to close in a third state.

14. The hydraulically driven fluid injection system of claim 13 wherein the first output comprises a first diameter line and the second output comprises a second diameter line, wherein the second diameter is smaller than the first diameter, and optionally further comprising a filter between the second chamber and the metering valve.

15. The hydraulically driven fluid injection system of claim 14 further comprising an electrohydraulic solenoid valve (EHSV), wherein the EHSV is configured to control the reservoir control valve, and optionally wherein the metering valve has a first output and a second output, the metering valve is configured to provide an output to the first output in a first state, configured to provide an output to the second output in a second state, and configured to close in a third state.
